(19) 

Europäisches
Patentamt
European
Patent Office
Office européen
des brevets

(11) **EP 4 215 057 A1**

(12) **EUROPEAN PATENT APPLICATION**
published in accordance with Art. 153(4) EPC

(43) Date of publication:
**26.07.2023 Bulletin 2023/30**

(21) Application number: **21869437.0**

(22) Date of filing: **16.09.2021**

(51) International Patent Classification (IPC):
**A23L 5/00** *(2016.01)*   **A23L 11/00** *(2021.01)*
**A23L 11/60** *(2021.01)*

(52) Cooperative Patent Classification (CPC):
**A23L 5/00; A23L 11/00; A23L 11/60**

(86) International application number:
**PCT/JP2021/034195**

(87) International publication number:
**WO 2022/059754 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2020 JP 2020157863**

(71) Applicant: **Amano Enzyme Inc.**
**Nagoya-shi**
**Aichi 460-8630 (JP)**

(72) Inventor: **TANAKA, Ryosuke**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **METHOD OF MANUFACTURING PROCESSED CHICKPEA MILK**

(57)     The purpose of the present invention is to provide a processing technique whereby the flavor of a chickpea milk can be improved. According to this method of manufacturing a processed chickpea milk including a step for treating a chickpea milk with a protein deamidase, the flavor of the chickpea milk can be improved.

EP 4 215 057 A1

**Description**

TECHNICAL FIELD

The present invention relates to a processing technique capable of improving flavor of chickpea milk, and more specifically, the present invention relates to a method of manufacturing processed chickpea milk, a flavor improving agent for chickpea milk, and a flavor improving method of chickpea milk.

BACKGROUND ART

Beverages rich in nutrients such as proteins have been widely familiar to people since nutrients can be easily taken. On the other hand, on the basis of an increase in the number of vegetarian people, allergic problems, religious reasons, and the like in recent years, soy milk using soybeans rich in a vegetable protein as a raw material has been widely spread as an alternative to animal milk typified by cow milk.

Regarding a soybean protein, various modification treatments have been studied for the purpose of improving existing characteristics thereof, providing food products having new preference characteristics, and the like.

For example, Patent Document 1 describes that the yield of soybean protein from soybean powder is improved by subjecting the soybean powder to a protein deamidase treatment. Patent Document 2 describes that a polyglycerol fatty acid ester containing a fatty acid having 12 to 22 carbon atoms as a main constituent fatty acid is effective as a dispersion stabilizer for soy milk. Patent Document 3 describes that by subjecting soy milk to a deamidation treatment with a cation exchange resin and/or a phytic acid removal treatment with an anion exchange resin, precipitation hardly occurs with respect to a coagulant.

On the other hand, for example, in view of the fact that proteins and allergic problems are not unrelated to each other, in view of coping with further diversification of preference, and in view of an increase in consciousness of avoiding intake of genetically modified soybeans frequently used for soy milk, further options other than soy milk are required for food products and beverages containing vegetable proteins.

Chickpeas are a food material that is attracting attention as a substitute food product for soybeans, and contain isoflavone and are high in protein similarly to soybeans; on the other hand, chickpeas are lower in lipid and rich in dietary fiber than soybeans. The chickpeas are processed into a chickpea paste or chickpea milk, and are also commercially available.

PRIOR ART DOCUMENTS

PATENT DOCUMENTS

    Patent Document 1: Japanese Patent Laid-open Publication No. 2000-50887
    Patent Document 2: Japanese Patent Laid-open Publication No. 2008-283900
    Patent Document 3: Japanese Patent Laid-open Publication No. 2015-159765

SUMMARY OF THE INVENTION

PROBLEMS TO BE SOLVED BY THE INVENTION

The history of processed food products of chickpeas is very shallow, and a processing technique of chickpeas has not been sufficiently studied yet as compared with major processed food products such as soy milk. Chickpea milk is also characteristic in that it exhibits a unique strength of taste as compared to soy milk but aftertaste easily remains, and initial taste is lighter than that of nut milk such as almond milk and coconut milk, and this characteristic is also a characteristic to be improved as flavor of the chickpea milk. In view of the possibility of spread and expansion of chickpea milk in the future, a technique capable of improving flavor of the chickpea milk is desired in order to cope with diversification of consumers' taste preferences.

Therefore, an object of the present invention is to provide a processing technique capable of improving flavor of chickpea milk.

MEANS FOR SOLVING THE PROBLEM

As a result of intensive studies of the present inventor, the present inventor has found that flavor of chickpea milk can be improved by treating chickpea milk using a protein deamidase whose taste improving action on plant milk has not been known. That is, the present invention provides inventions of the following aspects.

Item 1. A method of manufacturing processed chickpea milk, including a step of treating chickpea milk with a protein deamidase.
Item 2. The manufacturing method described in item 1, in which the protein deamidase is used in an amount of 0.1 U or more per 1 g of a soluble solid content of the chickpea milk.
Item 3. The manufacturing method described in item 1 or 2, in which the chickpea milk is treated with an $\alpha$-amylase.
Item 4. A flavor improving agent for chickpea milk, containing a protein deamidase.
Item 5. The flavor improving agent described in item 4, in which the flavor improvement is enhancement of sharpness of aftertaste.
Item 6. The flavor improving agent described in item 4 or 5, in which the flavor improvement is enhancement of richness of initial taste.
Item 7. A flavor improving method of chickpea milk, including a step of treating chickpea milk with a protein deamidase to obtain chickpea milk with improved flavor
Item 8. The flavor improving method described in item 7, in which the chickpea milk with improved flavor is chickpea milk with enhanced sharpness of aftertaste.
Item 9. The flavor improving method described in item 7 or 8, in which the chickpea milk with improved flavor is chickpea milk with enhanced richness of initial taste.

ADVANTAGES OF THE INVENTION

According to the present invention, there is provided a processing technique capable of improving flavor of chickpea milk.

EMBODIMENTS OF THE INVENTION

1. Method of Manufacturing Processed Chickpea Milk

A method of manufacturing processed chickpea milk of the present invention includes a step of treating chickpea milk with a protein deamidase. Hereinafter, the method of manufacturing processed chickpea milk of the present invention will be specifically described.

1-1. Chickpea Milk

Chickpeas are a seed of the genus Cicer arietinum in the Fabaceae family, are also called Garbanzo, Egyptian peas, or chana beans. Examples of the chickpeas include Kabuli species and Desi species, but any species can be used in the present invention.
The chickpea milk is typically prepared as a juice of water-absorbed chickpeas. Specific examples of the method for preparing chickpea milk include a method in which a chickpea slurry is prepared by immersing chickpeas in water and subjecting the chickpeas to moisture-absorbing and then crushing the chickpeas or by immersing chickpea powder in water and subjecting the chickpea powder to moisture-absorbing, and the prepared chickpea slurry is heated and then filtered.
The chickpea milk is preferably treated with an $\alpha$-amylase from the viewpoint of improving solubility. The chickpea milk in this case can be prepared by further adding an $\alpha$-amylase to the chickpea slurry and then heating the mixture, in the example of the method for preparing chickpea milk. The $\alpha$-amylase used in this case is not particularly limited, but an $\alpha$-amylase derived from the genus Bacillus is preferable, and an $\alpha$-amylase derived from Bacillus amyloliquefaciens species is more preferable.
The used amount of the $\alpha$-amylase is, for example, 100 to 10000 U, preferably 200 to 5000 U, more preferably 300 to 1000 U, further preferably 350 to 700 U, and still more preferably 400 to 500 U, per 100 g of the soluble solid content in the chickpea slurry. For the activity of the $\alpha$-amylase, potato starch is used as a substrate, and the amount of enzyme that reduces the color of potato starch with iodine by 10% per minute is defined as 1 unit (1 U).
The heating temperature of the chickpea slurry is, for example, 90°C or higher, preferably 95°C or higher, and more preferably a boiling temperature (that is, the upper limit temperature of the heating temperature). As a sieve used to filter the heat-treated chickpea slurry, a normal food filtration bag used for squeezing soy milk or the like can be used.
In the chickpea milk, the amount of water with respect to 1 part by weight of chickpeas is, for example, 4 to 10 parts by weight, preferably 5 to 8 parts by weight, and more preferably 6 to 7 parts by weight. The content of the soluble solid content in the chickpea milk is, for example, 3 to 10 wt% and preferably 5 to 8 wt%, and the content of the protein in the chickpeas is, for example, 1 to 8 wt% and preferably 2.5 to 5 wt%.

1-2. Protein Deamidase

The type, origin, and the like of the protein deamidase used in the present invention are not particularly limited as long as the protein deamidase is an enzyme that exhibits an action of decomposing an amide group-containing side chain of a protein without cleaving peptide bonds and crosslinking the protein. Examples of the protein deamidase include a protein deamidase derived from the genus Chryseobacterium, Flavobacterium, Empedobacter, Sphingobacterium, Aureobacterium, or Myroides, and a protein glutaminase derived from the genus Chryseobacterium, which are disclosed in JP 2000-50887 A, JP 2001-218590 A, and WO 2006/075772 A1. These protein deamidases may be used singly or in combination of a plurality of kinds thereof.
Among these protein deamidases, from the viewpoint of further enhancing the flavor-improving effect of the chickpea milk, a protein deamidase derived from the genus Chryseobacterium is preferable, a protein glutaminase derived from the genus Chryseobacterium is more preferable, and a protein glutaminase derived from Chryseobacterium proteolyticum species is further preferable.
The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a protein deamidase secreting microorganism, an enzyme can be separated and/or purified after recovering bacterial cells from the culture solution in advance by filtration, a centrifugal treatment, or the like, as necessary. In the case of using a non-protein deamidase secreting microorganism, an enzyme can be separated and/or purified after recovering bacterial cells from the culture solution in advance as necessary and then disrupting the bacterial cells by a pressurization treatment, an ultrasonic treatment, or the like to expose an enzyme. As an enzyme separation and/or purification method, a known protein separation and/or purification method can be used without particular limitation, and examples thereof include a centrifugal separation method, a UF concentration method, a salting-out method, and various chromatography methods using an ion-exchange resin or the like. The separated and/or purified enzyme can be powdered by a drying method such as freeze-drying or reduced-pressure drying, and can also be powdered using an appropriate excipient and/or drying aid in the drying method. The separated and/or purified enzyme can also be liquefied by adding an appropriate additive and performing filtration sterilization.
As the protein deamidase, a commercially available product can also be used, and examples of a preferred commercially available product include a protein glutaminase "Amano" 500 manufactured by Amano Enzyme Inc.
The titer of the protein deamidase is not particularly limited, and is, for example, 50 to 1000 U/g, 100 to 900 U/g, or 200 to 800 U/g, preferably 300 to 700 U/g, more preferably 400 to 600 U/g, and still more preferably 450 to 550 U/g.
The used amount of the protein deamidase is not particularly limited, but the used amount of the protein deamidase per 1 g of the chickpea protein is, for example, 0.1 U or more, and from the viewpoint of further enhancing the flavor-improving effect of the chickpea milk, the used amount thereof is preferably 1 U or more, more preferably 5 U or more, further preferably 10 U or more, still more preferably 30 U or more, even more preferably 50 U or more, and particularly preferably 70 U or more. The upper limit of the used amount range of the protein deamidase per 1 g of the chickpea protein is not particularly limited, and is, for example, 1000 U or less, 500 U or less, 200 U or less, or 100 U or less. As for the used amount of the protein deamidase, the used amount of the protein deamidase per 1 g of the soluble solid content of the chickpea milk is, for example, 0.1 U or more, and from the viewpoint of further enhancing the flavor-improving effect of the chickpea milk, the used amount thereof is preferably 1 U or more, more preferably 5 U or more, further preferably 10 U or more, still more preferably 20 U or more, and even more preferably 30 U or more. The upper limit of the used amount range of the protein deamidase per 1 g of the soluble solid content of the chickpea milk is not particularly limited, and is, for example, 2000 U or less, 1000 U or less, 500 U or less, or 200 U or less. As for the used amount of the protein deamidase, the used amount of the protein deamidase per 100 mL of the chickpea milk is, for example, 1 U or more, and from the viewpoint of further enhancing the flavor-improving effect of the chickpea milk, the used amount thereof is preferably 5 U or more, more preferably 10 U or more, further preferably 20 U or more, still more preferably 100 U or more, even more preferably 150 U or more, and particularly preferably 200 U or more. The upper limit of the used amount of the protein deamidase per 100 mL of the chickpea milk is not particularly limited, and is, for example, 5000 U or less, preferably 2000 U or less, more preferably 1000 U or less, and further preferably 500 U or less.
For the activity of the protein deamidase, benzyloxycarbonyl-L-glutaminylglycine (Z-Gln-Gly) is used as a substrate, and the amount of enzyme that liberates 1 $\mu$mol of ammonia per minute is defined as 1 unit (1 U).

1-3. Reaction Conditions, etc.

In the step of treating chickpea milk with a protein deamidase, a chickpea milk composition containing chickpea milk and a protein deamidase is prepared by adding a protein deamidase to the chickpea milk, and an enzyme treatment reaction (that is, a reaction for improving the flavor of the chickpea milk) can be advanced by maintaining the chickpea milk composition in a heated state.

The heating temperature (enzyme treatment reaction temperature) of the chickpea milk composition is not particularly limited, and can be appropriately determined by those skilled in the art according to the optimal temperature of the enzyme to be used and the like, but is, for example, 40 to 70°C, preferably 50 to 70°C, more preferably 55 to 65°C, and further preferably 58 to 62°C.

The enzyme treatment reaction time of the chickpea milk composition is not particularly limited, and may be appropriately determined according to the preparation scale of the composition, but is, for example, 0.5 hours or longer and preferably 1 hour or longer. The upper limit of the range of the enzyme treatment reaction time is not particularly limited, and is, for example, 24 hours or shorter, 12 hours or shorter, 8 hours or shorter, 6 hours or shorter, or 4 hours or shorter.

The enzyme treatment reaction can be terminated by an enzyme deactivation treatment with high heat. The enzyme deactivation treatment temperature is, for example, 85°C or higher and preferably 90°C or higher, and the enzyme deactivation time is, for example, 5 to 25 minutes and 10 to 20 minutes.

The chickpea milk composition after the end of the enzyme treatment is subjected to a post-treatment such as filtration as necessary, and is obtained as processed chickpea milk (that is, chickpea milk with improved flavor).

2. Flavor Improving Agent for Chickpea Milk and Flavor Improving Method of Chickpea Milk

As described above, the protein deamidase can improve flavor of chickpea milk. Therefore, the present invention also provides a flavor improving agent for chickpea milk and a flavor improving method of chickpea milk.

A flavor improving agent for chickpea milk of the present invention contains a protein deamidase. In the present invention, "flavor improvement" includes "enhancement of sharpness of aftertaste" and/or "enhancement of richness of initial taste".

A flavor improving method of chickpea milk of the present invention includes a step of treating chickpea milk with a protein deamidase to obtain chickpea milk with improved flavor. Similarly to the above description, "with improved flavor" includes "with enhanced sharpness of aftertaste" and/or "with enhanced richness of initial taste".

The "aftertaste" refers to a taste sensation remaining on the tongue after a beverage is swallowed, and the "initial taste" refers to a taste sensation felt immediately after the beverage is included in the mouth, particularly within 3 seconds. "Sharpness" of the aftertaste being enhanced means that the time during which the aftertaste remains is short and sensation that the aftertaste after the beverage is swallowed is felt more clearly is obtained. The enhancement of "richness" of initial taste means that sensation that richness feeling in the initial taste is further felt is obtained.

In the flavor improving agent for chickpea milk and the flavor improving method of chickpea milk described above, the type, used amount, and the like of the component to be used are as described in the section of "1. Method of Manufacturing Processed Chickpea Milk".

EXAMPLES

Hereinafter, the present invention will be specifically described by means of Examples; however, the present invention is not to be construed as being limited to the following Examples.

Details of enzymes used in the following test examples are as follows.

[Table 1]

| Enzyme species | Abbreviation | Trade name | Origin |
|---|---|---|---|
| Protein glutaminase | PG | Protein-glutaminase "Amano" 500 | Chryseobacterium proteolyticum |
| α-Amylase | E5CC | Kleistase E5CC | Bacillus amyloliquefaciens |

The activity of the protein deamidase (protein glutaminase) was measured by the following method.

(1) To 1 ml of a 0.2 M phosphate buffer (pH 6.5) containing 30 mM Z-Gln-Gly, 0.1 ml of an aqueous solution containing a protein deamidase was added, the mixture was incubated at 37°C for 10 minutes, and then 1 ml of a 0.4 M TCA solution was added to stop the reaction. As a blank, to 1 ml of a 0.2 M phosphate buffer (pH 6.5) containing 30 mM Z-Gln-Gly, 1 ml of a 0.4 M TCA solution was added, 0.1 ml of an aqueous solution containing a protein deamidase was further added, and the mixture was incubated at 37°C for 10 minutes.

(2) The amount of ammonia generated in the reaction solution was measured for the solution obtained in (1) using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

(3) The activity of the protein deamidase was calculated from the following formula with the amount of enzyme that produces 1 μmol of ammonia per minute being defined as 1 unit (1 U). In the formula, the reaction solution amount is 2.1, the enzyme solution amount is 0.1, and Df is a dilution rate of the enzyme solution. 17.03 is a molecular weight of ammonia.

[Chemical Formula 1]

Enzyme activity (U/mL)

= ammonia concentration in reaction solution (mg/L) × (1/17.03) × (reaction solution amount/

enzyme solution amount) × (1/10) × Df

Test Example 1

(1) Preparation of Chickpea Milk

In a large amount of water, 200 g of chickpeas were immersed and left to stand at room temperature for 24 hours. The water-absorbed chickpeas were collected and put into a mixer, and water was added to such an extent that the chickpeas were covered. The mixture was crushed with the mixer for 2 minutes, water was added thereto, and the mixture was further stirred to prepare a chickpea slurry. The total amount of water used for the water-absorbed chickpeas was 1.2 L. The chickpea slurry was put in a pot, E5CC (α-amylase) was added in an amount of 450 U with respect to 100 g of the soluble solid content of the chickpea slurry, and the mixture was boiled and then simmered over low heat for 20 to 30 minutes. Thereafter, the mixture was filtered with a strainer bag to prepare chickpea milk. The prepared chickpea milk was parceled out under stirring. The content of the soluble solids in the chickpea milk is about 7 wt%, and the content of the protein in the chickpea milk calculated from the content of the protein of chickpeas is about 3.3 wt%.

(2) Enzyme Treatment

A protein glutaminase (PG) was charged in an amount shown in Table 2, and reacted at 60°C for 1 hour, 2 hours, or 3 hours. The enzyme deactivation treatment was performed at 90°C for 15 minutes to obtain processed chickpea milk (Examples 1 to 6). Processed chickpea milk (Comparative Example 1) was also prepared without charging PG and performing an enzyme treatment reaction at 60°C, but performing only treatment at 90°C for 15 minutes. Processed soy milk (Comparative Examples 2 and 3) was also prepared in the same manner as in Comparative Example 1 and Example 6, respectively, except that soy milk (that is, soybean milk) was used instead of chickpea milk.

(3) Evaluation

The obtained processed chickpea milk and processed soy milk were subjected to sensory evaluation on pH (25°C) and flavor (initial taste and aftertaste). The results are shown in Table 2.

<Sensory Evaluation on Initial Taste>

The taste sensation (initial taste) felt immediately after the milk was included in the mouth to 3 seconds was evaluated on the basis of the following criteria.

--: The initial taste is light.
-: The initial taste has weak richness.
+: The richness of initial taste is enhanced.
+ +: The richness of initial taste is further enhanced.

<Sensory Evaluation on Aftertaste>

The taste sensation (aftertaste) remaining on the tongue after the milk was included in the mouth for 3 seconds and then swallowed was evaluated on the basis of the following criteria.

- -: The strong aftertaste remains.

-: The aftertaste remains.

+: The sharpness of aftertaste is enhanced and the aftertaste is clean.

+ +: The sharpness of aftertaste is further enhanced and the aftertaste is cleaner.

[Table 2]

| | Material | PG (U) | | | Reaction condition | pH | Initial taste | Aftertaste |
|---|---|---|---|---|---|---|---|---|
| | | Per 100 mL of milk | Per 1 g of soluble solid content | Per 1 g of protein | | | | |
| Comparative Example 1 | Chickpea milk | 0 | 0 | 0 | | 6.32 | - | - |
| Example 1 | Chickpea milk | 50 | About 7 | About 15 | 60°C - 1 hr | 6.29 | + | + |
| Example 2 | Chickpea milk | 50 | About 7 | About 15 | 60°C - 2 hr | 6.28 | + | + |
| Example 3 | Chickpea milk | 50 | About 7 | About 15 | 60°C - 3 hr | 6.26 | + | 1 |
| Example 4 | Chickpea milk | 250 | About 35.5 | About 75.5 | 60°C - 1 hr | 6.16 | ++ | ++ |
| Example 5 | Chickpea milk | 250 | About 35.5 | About 75.5 | 60°C - 2 hr | 6.13 | ++ | ++ |
| Example 6 | Chickpea milk | 250 | About 35.5 | About 75.5 | 60°C - 3 hr | 6.09 | ++ | ++ |
| Comparative Example 2 | Soy milk | 0 | 0 | 0 | | - | - | - |
| Comparative Example 3 | Soy milk | 250 | 20.8 | 50 | 60°C - 3 hr | < | - | - |

As shown in Table 2, in the chickpea milk (Comparative Example 1) not treated with a protein glutaminase, the richness of initial taste was weak and the strong aftertaste remained; however, by the protein glutaminase treatment (Examples 1 to 6), while the initial taste was enhanced in the richness, the sharpness of aftertaste was enhanced and the aftertaste was improved to clean flavor. In the soy milk (Comparative Examples 2 and 3), the effect of improving flavor by the protein glutaminase treatment was not observed.

**Claims**

1. A method of manufacturing processed chickpea milk, comprising a step of treating chickpea milk with a protein deamidase.

2. The manufacturing method according to claim 1, wherein the protein deamidase is used in an amount of 0.1 U or more per 1 g of a soluble solid content of the chickpea milk.

3. The manufacturing method according to claim 1 or 2, wherein the chickpea milk is treated with an $\alpha$-amylase.

4. A flavor improving agent for chickpea milk, comprising a protein deamidase.

5. The flavor improving agent according to claim 4, wherein the flavor improvement is enhancement of sharpness of aftertaste.

6. The flavor improving agent according to claim 4 or 5, wherein the flavor improvement is enhancement of richness of initial taste.

7. A flavor improving method of chickpea milk, comprising a step of treating chickpea milk with a protein deamidase to obtain chickpea milk with improved flavor.

8. The flavor improving method according to claim 7, wherein the chickpea milk with improved flavor is chickpea milk with enhanced sharpness of aftertaste.

9. The flavor improving method according to claim 7 or 8, wherein the chickpea milk with improved flavor is chickpea milk with enhanced richness of initial taste.

## INTERNATIONAL SEARCH REPORT

| International application No. |
| --- |
| **PCT/JP2021/034195** |

**A.    CLASSIFICATION OF SUBJECT MATTER**

*A23L 5/00*(2016.01)i; *A23L 11/00*(2021.01)i; *A23L 11/60*(2021.01)i
FI:    A23L11/60; A23L11/00 F; A23L5/00 J

According to International Patent Classification (IPC) or to both national classification and IPC

**B.    FIELDS SEARCHED**

Minimum documentation searched (classification system followed by classification symbols)

A23L5/00; A23L11/00; A23L11/60

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CAplus/MEDLINE/EMBASE/BIOSIS/FSTA/AGRICOLA (STN)

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2020/171106 A1 (AMANO ENZYME INCOPORATED) 27 August 2020 (2020-08-27) claims, paragraphs [0013], [0022]-[0024] | 1-3 |
| A | | 4-9 |
| Y | CN 104255931 A (YANGZHOU UNIVERSITY) 07 January 2015 (2015-01-07) examples 1, 2 | 1-3 |
| A | | 4-9 |
| Y | US 2016/0309732 A1 (GENERAL MILLS, INCORPORATED) 27 October 2016 (2016-10-27) claims 20-22, example 1 | 1-3 |
| A | | 4-9 |
| Y | JP 2013-518580 A (CLEARFARMA INDUSTRIES LIMITED) 23 May 2013 (2013-05-23) claim 1, paragraphs [0013]-[0016] | 1-3 |
| A | | 4-9 |

☑ Further documents are listed in the continuation of Box C.　　☑ See patent family annex.

| | |
| --- | --- |
| *     Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **29 October 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/034195** |

### C. DOCUMENTS CONSIDERED TO BE RELEVANT

| Category* | Citation of document, with indication, where appropriate, of the relevant passages | Relevant to claim No. |
| --- | --- | --- |
| A | SUPPAVORASATIT, I. et al. Effect of enzymatic protein deamidation on protein solubility and flavor binding properties of soymilk. J. Food Sci. 2013, vol. 78, no. 1, pp. C1-C7 abstract, fig. 2-3 | 1-9 |

Form PCT/ISA/210 (second sheet) (January 2015)

**INTERNATIONAL SEARCH REPORT**
Information on patent family members

International application No.

**PCT/JP2021/034195**

| Patent document cited in search report | | | Publication date (day/month/year) | Patent family member(s) | | | Publication date (day/month/year) |
|---|---|---|---|---|---|---|---|
| WO | 2020/171106 | A1 | 27 August 2020 | (Family: none) | | | |
| CN | 104255931 | A | 07 January 2015 | (Family: none) | | | |
| US | 2016/0309732 | A1 | 27 October 2016 | WO | 2016/172570 | A1 | |
| | | | | EP | 3285596 | A1 | |
| | | | | CN | 107529782 | A | |
| JP | 2013-518580 | A | 23 May 2013 | US | 2013/0196028 | A1 | |
| | | | | claim 1, paragraphs [0002], [0013]-[0016] | | | |
| | | | | WO | 2011/095975 | A1 | |
| | | | | EP | 2531045 | A1 | |
| | | | | CN | 102821620 | A | |
| | | | | KR | 10-2012-0129945 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000050887 A
- JP 2008283900 A
- JP 2015159765 A
- JP 2001218590 A
- WO 2006075772 A1